# DEMANDE DE BREVET EUROPEEN

(11) **EP 1 650 964 A1**
(43) Date de publication de la demande: **26.04.2006**
(21) Numéro de dépôt: 05292225.9
(22) Date de dépôt: 21.10.2005
(51) Int. Cl.: H04N 5/64

(54) **Téléviseur muni d'un caisson de basses integré**

(30) Priorité: 21.10.2004 FR 0411218
(71) Demandeur: Sagem SA, 75015 Paris (FR)
(72) Inventeur: Bourgoin, Gilles, 95810 Epiais Rhus (FR)
(74) Mandataire: Loisel, Bertrand

(57) **Abrégé**

Téléviseur (1) présentant une surface extérieure (2) et comprenant :
- un écran (4) d'affichage,
- des moyens (32) de production d'une image affichée sur l'écran,
- des moyens de restitution de sons incluant un caisson de basses (8) ayant une paroi délimitant un volume intérieur de résonance, la paroi du caisson de basses a un côté frontal (18) s'étendant dans le prolongement de l'écran (4), le caisson de basses comprend une zone d'aspect (16) dans laquelle s'étend le côté frontal et un rebord périphérique (22) s'étendant sensiblement perpendiculairement audit côté frontal,
- une structure porteuse (10) définissant une coque formant une partie de la surface extérieure (2) du téléviseur, la structure porteuse présente une ouverture (14) dans laquelle est étroitement reçue la zone d'aspect (16) du caisson de basses (8),
- un dispositif (12) d'absorption des vibrations reliant le caisson de basses (8) à la structure porteuse (10).

## Description

L'invention concerne un téléviseur équipé de moyens de restitution de sons incluant un caisson de basses intégré. Un tel caisson de basses présente une paroi délimitant un volume intérieur de résonance et comporte un haut-parleur dit boomer.

Les performances d'un tel caisson de basses pour reproduire de très basses fréquences sont liées au volume utile du caisson de basses. Pour des raisons esthétiques, la coque du téléviseur formant structure porteuse et intégrant l'essentiel de la surface extérieure visible du téléviseur renferme généralement le caisson de basses.

Le caisson de basses est soumis à des vibrations mécaniques notables dues aux basses fréquences sonores restituées par le boomer. Pour éviter que ces vibrations se transmettent à la structure porteuse du téléviseur, il est connu d'isoler la structure porteuse du caisson de basses par un dispositif d'absorption des vibrations reliant le caisson de basses à la structure porteuse.

L'invention vise à améliorer les performances sonores des téléviseurs existants et à réduire leur coût.

Par ailleurs, le document US-A-6 336 615 décrit un téléviseur présentant une surface extérieure visible, ledit téléviseur comprenant :
- un écran d'affichage,
- des moyens de production d'une image affichée sur l'écran,
- des moyens de restitution de sons incluant un caisson de basses ayant une paroi délimitant un volume intérieur de résonance, la paroi du caisson de basses a un côté frontal formant une partie de la surface extérieure du téléviseur, le côté frontal du caisson de basses s'étend dans le prolongement de l'écran,
- une structure porteuse une coque formant une partie de la surface extérieure du téléviseur,
- un dispositif d'absorption des vibrations reliant le caisson de basses à la structure porteuse.

Toutefois, ce téléviseur muni d'enceintes amovibles rapportées sur les côtés du téléviseur ne procure pas des performances sonores très satisfaisantes.

Pour atteindre les objectifs précités, conformément à l'invention, le téléviseur présente les caractéristiques suivantes :
- la structure porteuse présente une ouverture dans laquelle est étroitement reçue une zone d'aspect du caisson de basses intégrant le côté frontal,
- le caisson de basses comprend en outre dans la zone d'aspect un rebord périphérique s'étendant sensiblement perpendiculairement audit côté frontal,
- la structure porteuse comprend au moins un côté s'étendant dans le prolongement du rebord périphérique.

En intégrant une partie de la surface extérieure du téléviseur, au lieu de rester en retrait par rapport à ladite surface extérieure et en étant intégré dans la structure porteuse le caisson de basses présente un volume accru pour un même encombrement du téléviseur. Les performances du caisson de basses sont donc améliorées et le coût de fabrication est réduit.

En outre, le côté frontal prolonge l'écran et le caisson de basses se raccorde à la coque à l'écart de la surface frontale du téléviseur, de sorte que le caisson de basses s'intègre parfaitement au téléviseur d'un point de vue esthétique. En outre, le caisson de basses peut être inséré dans la coque en le faisant coulisser vers l'arrière, ce qui facilite le montage et la réparation du téléviseur.

Avantageusement, le téléviseur présente les caractéristiques suivantes :
- la structure porteuse comprend un côté inférieur et deux côtés latéraux s'étendant dans le prolongement du rebord périphérique,
- la structure porteuse comprend en outre un côté de fond relié au côté inférieur et aux côtés latéraux, et
- le dispositif d'absorption des vibrations comprend de multiples éléments reliant le caisson de basses à chacun des côtés latéraux, au côté inférieur et au côté de fond.

Ainsi, le caisson de basses est bien maintenu par rapport à la structure porteuse et ladite structure porteuse est bien isolée des vibrations du caisson de basses.

Selon une caractéristique complémentaire conforme à l'invention, les multiples éléments du dispositif d'absorption des vibrations sont constitués par des silentblocs et chacun desdits silentblocs est fixé uniquement à l'un et vient en appui sur l'autre des éléments parmi le caisson de basses et la structure porteuse.

Ainsi, après avoir fixé chacun des silentblocs sur l'un desdits éléments, il suffit de faire coulisser le caisson de basses à travers l'ouverture pour l'amener dans la position opérationnelle.

L'invention sera mieux comprise à la lecture des dessins sur lesquels :
- la figure 1 est une représentation schématique en coupe selon la ligne repérée I-I à la figure 2 d'un téléviseur conforme à l'invention,
- la figure 2 est une représentation schématique en coupe selon la ligne repérée II-II du téléviseur représenté la figure 1.

Les figures représentent un téléviseur 1, ici de type rétroprojecteur, comprenant essentiellement un écran 4, un dispositif 32 de génération d'image, un caisson de basses 8 sur lequel est fixé un haut-parleur 6, une coque 10 et un dispositif d'absorption des vibrations constitué ici par des silentblocs 12 reliant le caisson de basses 8 à la coque 10.

Le dispositif 32 de génération d'image émet un signal lumineux projeté sur l'écran 4 via des miroirs.

Le caisson de basses 8 est destiné à amplifier les basses fréquences générées par le haut-parleur 6. Il intègre par exemple un évent 42 d'un système "bass reflex" ou un autre moyen résonant.

La coque 10 constitue la structure porteuse du téléviseur supportant le caisson de basses 8 et sur laquelle est fixé le dispositif 32 de génération d'image. Les silentblocs 12 permettent d'isoler la coque 10 des vibrations du caisson de basses et d'éviter ainsi que le reste du téléviseur soit soumis à ces vibrations. Ces vibrations sont indésirables pour la fiabilité des composants assemblés, ainsi que pour la qualité et en particulier la stabilité de l'image projetée.

La coque 10 constitue également l'enveloppe extérieure du téléviseur et définit par conséquent l'essentiel de la surface extérieure 2 du téléviseur. Ainsi, elle renferme notamment, sensiblement en partie supérieure, le dispositif 32 de génération d'image et en partie inférieure le caisson de basses 8. Le caisson de basses 8 occupe plus précisément l'espace 34 laissé libre par le dispositif 32 de génération d'image à l'intérieur de la coque 10.

La coque 10 présente une ouverture 14 dans laquelle s'étend sensiblement verticalement une zone d'aspect 16 du caisson de basses 8. Le caisson de basses 8 présente dans cette zone d'aspect 16, un côté frontal 18 et un rebord périphérique 22.

Ledit côté frontal 18 s'étend sur la face frontale du téléviseur 1, sensiblement plate dans cette illustration, dans le prolongement de l'écran 4. Le haut-parleur 6 et l'évent 42 sont fixés au côté frontal 18. Des perforations 20 réalisées dans des grilles de protections 54 permettent de faire passer les ondes sonores issues du haut-parleur 6 et de l'évent 42 à travers le côté frontal 18.

Le rebord périphérique 22 s'étend sensiblement perpendiculairement au côté frontal 18, et dans le prolongement d'un côté inférieur 28 et de deux côtés latéraux 24, 26 de la coque 10, tous sensiblement plans.

Le côté inférieur 28 et les côtés latéraux 24, 26 de la coque sont tous trois reliés à un côté de fond 30 s'étendant sensiblement perpendiculairement à eux. Le côté inférieur 28, les côtés latéraux 24, 26 et le côté de fond 30 de la coque 10 présentent une face externe définissant la surface extérieure 2 du téléviseur et une face interne sur lesquels sont fixés les silentblocs 12.

Le caisson de basses 8 présente outre le côté frontal 18, des côtés latéraux 44, 46, un côté inférieur 48, un côté de fond 50 et un côté supérieur 52 fermant le caisson de basses 8. Les côtés latéraux 44, 46 et le côté inférieur 48 du caisson de basses 8 s'étendent parallèlement et en regard respectivement des côtés latéraux 24, 26 et du côté inférieur 28 de la coque 10 auxquels ils sont reliés par les silentblocs 12 sur lesquels ils viennent en appui. Le côté de fond 50 du caisson de basses 8 ne s'étend en partie en regard que d'une partie du côté de fond 30 de la coque.

Les silentblocs 12 ne sont pas fixés au caisson de basses 8, de sorte que le caisson de basses 8 peut être aisément extrait et remis en place dans l'espace 34 par coulissement suivant une direction 56 sensiblement perpendiculaire au côté frontal 18 du caisson de basses 8.

Compte tenu des vibrations du caisson de basses 8 par rapport à la coque 10, un jeu 40 est prévu entre d'une part le rebord 22 du caisson de basses 8 et d'autre part les côtés latéraux 24, 26 et le côté inférieur 28 de la coque 10, lesquels portent la surface extérieure 2 du téléviseur.

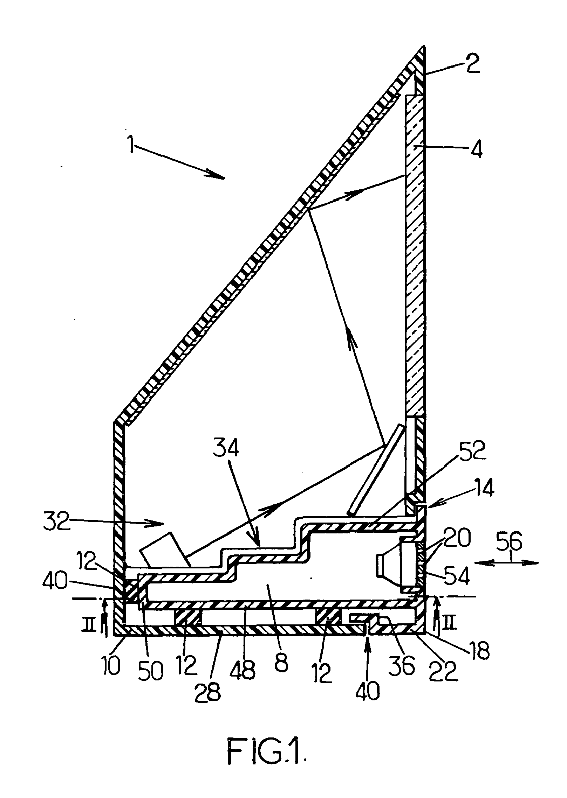

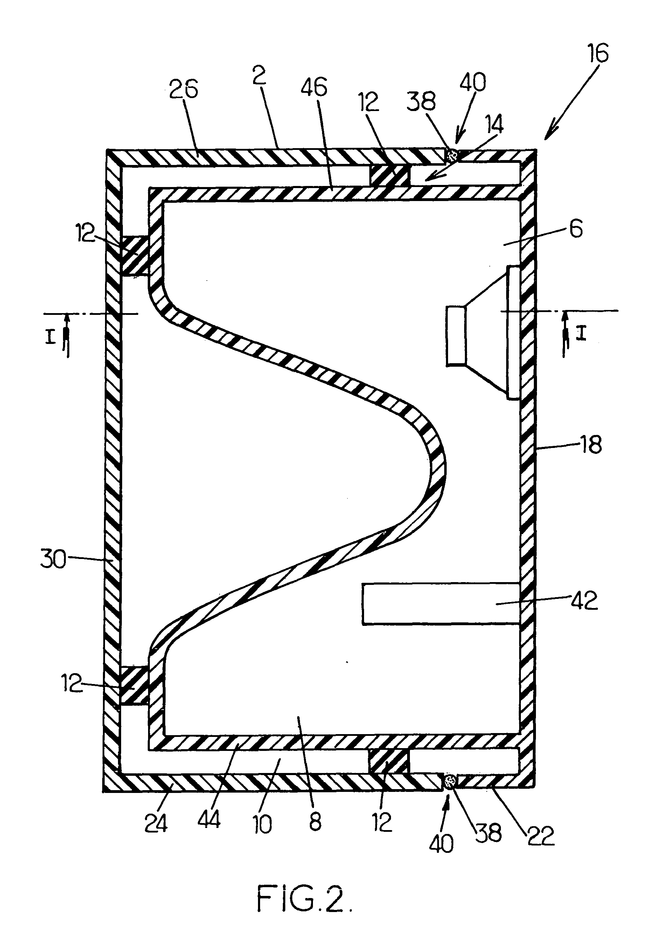

Pour des raisons esthétiques, ce jeu 40 est masqué par une chicane 36, solidaire du rebord 22, tel qu'illustré à la figure 1 et dans une variante illustrée à la figure 2 par un joint 40 en matériau souple.

## Revendications

1. Téléviseur (1) présentant une surface extérieure (2) visible, ledit téléviseur comprenant :
- un écran (4) d'affichage,
- des moyens (32) de production d'une image affichée sur l'écran,
- des moyens de restitution de sons incluant un caisson de basses (8) ayant une paroi délimitant un volume intérieur de résonance, la paroi du caisson de basses (8) a un côté frontal (18) formant une partie de la surface extérieure (2) du téléviseur, le côté frontal (18) du caisson de basses (8) s'étend dans le prolongement de l'écran (4),
- une structure porteuse (10) définissant une coque formant une partie de la surface extérieure (2) du téléviseur,
- un dispositif (12) d'absorption des vibrations reliant le caisson de basses (8) à la structure porteuse (10),
**caractérisé en ce que** :
- la structure porteuse (10) présente une ouverture (14) dans laquelle est étroitement reçue une zone d'aspect (16) du caisson de basses (8) intégrant le côté frontal (18),
- le caisson de basses (8) comprend en outre dans la zone d'aspect (16) un rebord périphérique (22) s'étendant sensiblement perpendiculairement audit côté frontal (18),
- la structure porteuse (10) comprend au moins un côté (24, 26, 28) s'étendant dans le prolongement du rebord périphérique (22).

2. Téléviseur selon la revendication 1, **caractérisé en ce que** :
- la structure porteuse (10) comprend un côté inférieur (26) et deux côtés latéraux (24, 28) s'étendant dans le prolongement du rebord périphérique (22),
- la structure porteuse (10) comprend en outre un côté de fond (30) relié au côté inférieur (26) et aux côtés latéraux (24, 28), et
- le dispositif d'absorption des vibrations comprend de multiples éléments (12) reliant le caisson de basses (8) à chacun des côtés latéraux (24, 28), au côté inférieur (26) et au côté de fond (30).

3. Téléviseur selon la revendication 2, **caractérisé en ce que** les multiples éléments du dispositif d'absorption des vibrations sont constitués par des silentblocs (12) et chacun desdits silentblocs est fixé uniquement à l'un et vient en appui sur l'autre des éléments parmi le caisson de basses (8) et la structure porteuse (10).

4. Téléviseur selon l'une quelconque des revendications précédentes, **caractérisé en ce que** le caisson de basses (8) comprend un haut-parleur (6) fixé au côté frontal (18).

5. Téléviseur selon l'une quelconque des revendications précédentes, **caractérisé en ce que** le caisson de basses (8) et la structure porteuse (10) sont légèrement disjoints et le téléviseur comprend en outre des moyens de masquage (36, 38) pour dissimuler visuellement le jeu (40) s'étendant entre le caisson de basses (8) et la structure porteuse (10).

6. Téléviseur selon la revendication 5, **caractérisé en ce que** lesdits moyens de masquage comprennent une chicane (36).

7. Téléviseur selon la revendication 5, **caractérisé en ce que** lesdits moyens de masquage comprennent un joint souple (38) s'étendant entre le caisson de basses (8) et la structure porteuse (10).
